# EUROPÄISCHE PATENTSCHRIFT

(11) **EP 0 742 997 B1**
(45) Veröffentlichungstag und Bekanntmachung des Hinweises auf die Patenterteilung: **08.03.2000**
(21) Anmeldenummer: 96107550.4
(22) Anmeldetag: 11.05.1996
(51) Int. Cl.: A01F 25/20

(54) **Vorrichtung zum Trennen von Silage**
Silage cutter
Dispositif de coupe d'ensilage

(30) Priorität: 19.05.1995 DE 29508316 U
(43) Veröffentlichungstag der Anmeldung: 20.11.1996
(73) Patentinhaber: Ahlhorn, Hermann, 26434 Wangerland (DE)
(72) Erfinder: Ahlhorn, Hermann, 26434 Wangerland (DE)
(74) Vertreter: Lauerwald, Jörg, Dipl.-Phys.

(56) Entgegenhaltungen:
- EP-A- 0 090 906
- AT-A- 374 527
- NL-A- 7 208 979

## Beschreibung

Die Erfindung betrifft eine Vorrichtung zum Trennen von Silage mit einem an einem Grundgerüst der Vorrichtung auf- und abbewegbar geführten, durch wenigstens ein Antriebsorgan angetriebenen Trennorgan, welches wenigstens drei, einen U-Rahmen bildende Messerleisten umfaßt, gemäß des Oberbegriffes des einzigen Patentanspruches.

Eine derartige Vorrichtung wird vorzugsweise für die Heraustrennung einer beispielsweise für die Fütterung von Vieh benötigten blockförmigen Silagemenge aus einer größeren Silageaufschüttung verwendet. Dazu wird die Vorrichtung an einem Fahrzeug, wie einem fahrbaren Schlepper oder Gabelstapler, eingehängt.

Es sind Trennvorrichtungen bekannt, die Trennorgane besitzen, welche angetriebene Messerleisten aufweisen. Ein Antrieb der Messerleisten ist erforderlich, um die relativ dicht gepreßte Silage zu trennen. Jede Messerleiste besteht beispielsweise aus zwei parallel zueinander angeordneten Messerleisten, welche einander entgegengesetzte, longitudinale Bewegungen ausführen, während sie mit dem Antriebsorgan auf die Silage gedrückt werden. Die Silage wird auf diese Weise durch eine Sägebewegung der Messerleisten durchtrennt. Die so ausgebildeten Messerleisten weisen auf nachteilige Weise einen relativ komplizierten und kostenungünstigen Aufbau auf. Zudem ist für ihre Sägebewegung ein entsprechender Antrieb erforderlich. Da jeweils zwei Messerleisten nebeneinander angeordnet sind, verbreitert sich zwangsläufig die Dicke des durch die Silage zu führenden Trennorgans. Auch Elemente des Antriebes für die Messerleisten liegen im durch die Silage zu führenden Bereich des Trennorgans und verbreitern dieses somit, wodurch sich der Widerstand der zu durchtrennenden Silage beim Durchführen des Trennorgans erhöht. Außerdem können sich die Antriebseelemente und die Zwischenräume zwischen den Messerleisten mit Silage zusetzen, wodurch die Sägebewegung der Messerleisten behindert wird und sogar zum Erliegen kommen kann. Nachteilig sind daher regelmäßige Wartungen, insbesondere aufwendige Reinigungen der Messerleisten und der Antriebselemente erforderlich.

Demgegenüber ist aus der AT-A- 374 527 eine gattungsgemäße Trennvorrichtung bekannt, die drei Messerleisten mit Messern aufweist, welche unbeweglich zueinander sind und somit einen starren U-Rahmen bilden. Die Messerleisten bilden dabei ein Stanzwerkzeug, das mit Hilfe eines entsprechend ausgelegten Antriebsorganes durch die Silage gedrückt wird und dabei aus der Silage ein Vierkantstück ausstanzt. Dieses ausgestanzte Vierkantstück wird unterseitig aus der Silage durch einen bei derartigen Vorrichtungen üblichen Rechen abgetrennt, der vor der Abwärtsbewegung des Stanzwerkzeuges in die Silage eingestochen worden ist, und auf diese Weise das ausgestanzte Vierkantstück als abhebbaren Quaderblock von dem übrigen Silagematerial trennt.

Für seine Auf- und Abbewegung wird der aus den Messerleisten gebildete Stanzrahmen an lotrechten Führungen des Grundgerüstes geführt.

Die aus der genannten Druckschrift bekannten Messerleisten, die einen Stanzrahmen bilden, sind gegenüber sägeartig bewegbaren Messerleisten einfacher aufgebaut und kostengünstiger herstellbar, und auch der Wartungsaufwand und der Reinigungsaufwand sind dadurch verringert.

Zudem kann jede Messerleiste relativ dünn ausgebildet sein, wodurch der Widerstand der Silage beim Durchführen des Stanzrahmens relativ gering ist. Allerdings ist für eine solche Stanzung durch das Antriebsorgan ein höherer Auflagedruck auf die Messerleisten aufzubringen, als dies bei einer sägeartigen Durchtrennung notwendig wäre. Das Antriebsorgan muß also entsprechend stark ausgebildet sein. Dies ist aber mit Hilfe eines hydraulischen oder pneumatischen Arbeitszylinders durchaus möglich.

Bei einer derartigen Trennvorrichtung muß jedoch vermieden werden, daß das Antriebsorgan in den Bereich der zu durchtrennenden Silage gerät und dadurch verschmutzt. Außerdem muß eine kippfreie und verklemmungsfreie Bewegung des Stanzrahmens gewährleistet sein, bei der die Stanzkraft möglichst gleichmäßig verteilt ist.

Der Erfindung liegt daher die Aufgabe zugrunde, eine gattungsgemäße Trennvorrichtung dahingehend weiterzubilden, daß die vorgenannte, sicherere Bewegung des Stanzrahmens gewährleistet ist.

Diese Aufgabe wird erfindungsgemäß dadurch gelöst, daß auf die Führungen mit dem Stanzrahmen verbundene, als Vierkantprofile mit weiterem Querschnitt als die Führungen ausgebildete Hülsen aufgeschoben sind und daß zwei in der Ebene der Führungen angeordnete Arbeitszylinder als Antriebsorgane vorgesehen sind, die am Grundgerüst befestigt sind und deren Kolbenstangen über ihre freien Enden mit den Hülsen des Stanzrahmens verbunden sind. Der Stanzrahmen ist mit den Hülsen leicht und unter weitgehendem Ausschluß von Verklemmungen auf den als Vierkantprofilen ausgebildeten Führungen auf- und abbewegbar, wobei die als Antriebsorgane vorgesehenen Arbeitszylinder am Grundgerüst befestigt sind und über die freien Enden ihrer Kolbenstangen mit den Hülsen des Stanzrahmens verbunden sind. Aufgrund der Verteilung der aufzubringenden Stanzkraft auf zwei Arbeitszylinder kann jeder dieser Arbeitszylinder weniger stark ausgebildet sein. Beide Arbeitszylinder sind, von Verschmutzungen ungefährdet, außerhalb des Stanzweges des Stanzrahmens neben den Führungen angeordnet. Das Grundgerüst bildet durch die Befestigung der Arbeitszylinder ein Widerlager für die Antriebsorgange des Stanzrahmens. Der mit den freien Enden der Kolbenstangen in Verbindung stehende Stanzrahmen ist dagegen durch die Aus- und Einschiebung der Kolbenstangen auf den Vierkantprofilen auf- und abbewegbar. Jeder Arbeitszylinder ist einem Vierkantprofil des Grundgerüstes zugeordnet, wobei der Abstand zwischen dem Arbeitszylinder und dem Vierkantprofil relativ gering ist. Beide Bauteile sind parallel zueinander ausgerichtet, so daß eine sichere, insbesondere kippfreie Verschiebung der mit dem Stanzrahmen verbundenen Hülsen auf den Vierkantprofilen möglich ist.

Damit die Antriebsorgane, welche die für die Durchtrennung der Silage erforderliche Stanzkraft aufbringen, nicht zu große Dimensionen aufweisen, ist in an sich bekannter Weise vorgesehen, daß die Messerleisten mit spatenblattartigen Stanzelementen bestückt sind. Durch die spatenblattartige Ausbildung wird zu Beginn der Stanzung eine punktuelle Auflage der Stanzelemente nur mit den Spatenspitzen auf der Silage ermöglicht. Dadurch wird die Eindrückung des Stanzrahmens in die Silage vorteilhaft erleichtert. Zudem sind die der Silage zugekehrten Kanten der Spatenelemente angeschärft.

Zur weiteren Ausbildung der Erfindung ist schließlich als Stanzwiderlager ein mit dem Grundgerüst verbundener Rechen mit horizontal verlaufenden Zinken vorgesehen. Bei der Abtrennung der benötigten Silagemenge wird zunächst der Rechen in vorbestimmter Höhe in die Silage eingestochen und dann der Stanzrahmen gegen diesen Rechen geführt, so daß nach der Ausstanzung die gewünschte Silagemenge auf dem Rechen aufliegt und auf diesem auch zu dem Ort ihrer Verwendung transportiert werden kann.

Ein Ausführungsbeispiel der Erfindung, aus dem sich weitere erfinderische Merkmale ergeben, ist in der Zeichnung dargestellt. Es zeigen:
- Fig. 1: eine Seitenansicht einer Vorrichtung zum Trennen von Silage,
- Fig. 2: eine Seitenansicht der Vorrichtung gemäß Fig. 1 und
- Fig. 3: eine Draufsicht der Vorrichtung gemäß Fig. 1 und 2.

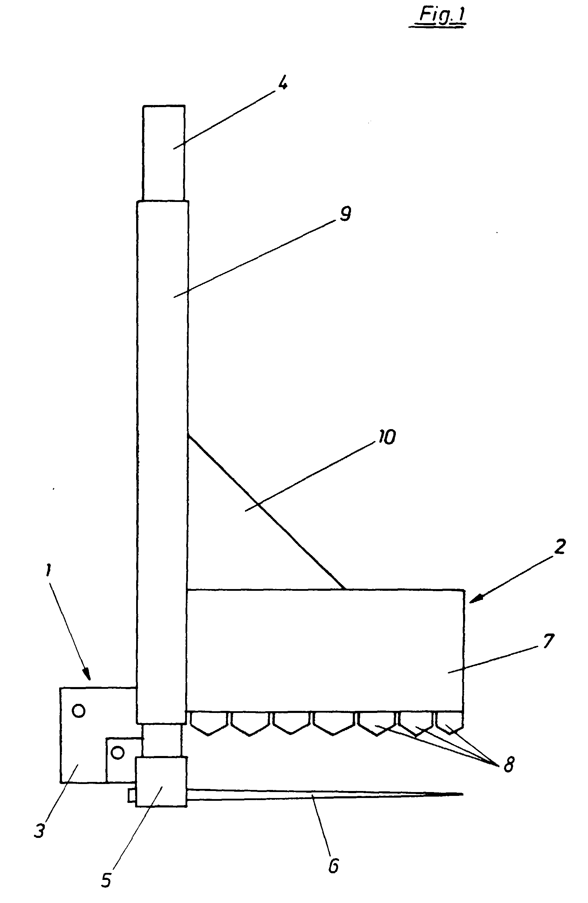

Die Vorrichtung in Fig. 1 hat ein Grundgerüst 1, an dem ein Stanzrahmen 2 auf- und abbewegbar geführt ist. Das Grundgerüst 1 weist zwei vertikal angeordnete Vierkantprofile 4,4' auf, von denen in Fig. 1 nur das Vierkantprofil 4 dargestellt ist. Beide Vierkantprofile 4, 4' sind mit einem Querträger 5 verbunden, an dem horizontal verlaufende Zinken 6 angeordnet sind. Die Zinken 6 bilden einen Rechen als Stanzwiderlager für den Stanzrahmen 2. An dem Querträger 5 sind Verbindungselemente 3 zur Einhängung des Grundgerüstes 1 an einem nicht dargestellten Fahrzeug befestigt.

Der Stanzrahmen 2 besteht aus drei relativ zueinander unbeweglich miteinander verbundenen Messerleisten, wobei in Fig. 1 nur eine seitlich angeordnete Messerleiste 7 gezeigt ist. An ihrer den Zinken 6 zugekehrten Längsseite ist die Messerleiste 7 mit spatenblattartigen Stanzelementen 8 bestückt.

Zur Ermöglichung der Auf- und Abbewegung des Stanzrahmens 2 ist dieser mit Hülsen 9,9' verbunden, welche auf den Vierkantprofilen 4,4' höhenverschiebbar geführt sind. Die Verbindung von Stanzrahmen 2 und Hülsen 9 wird durch Knotenbleche 16,16' stabilisiert. Bei einer Abwärtsbewegung des Stanzrahmens 2 ist eine zwischen dem Stanzrahmen 2 und den Zinken 6 befindliche Silagemenge aus einer größeren Silageaufschüttung herausstanzbar.

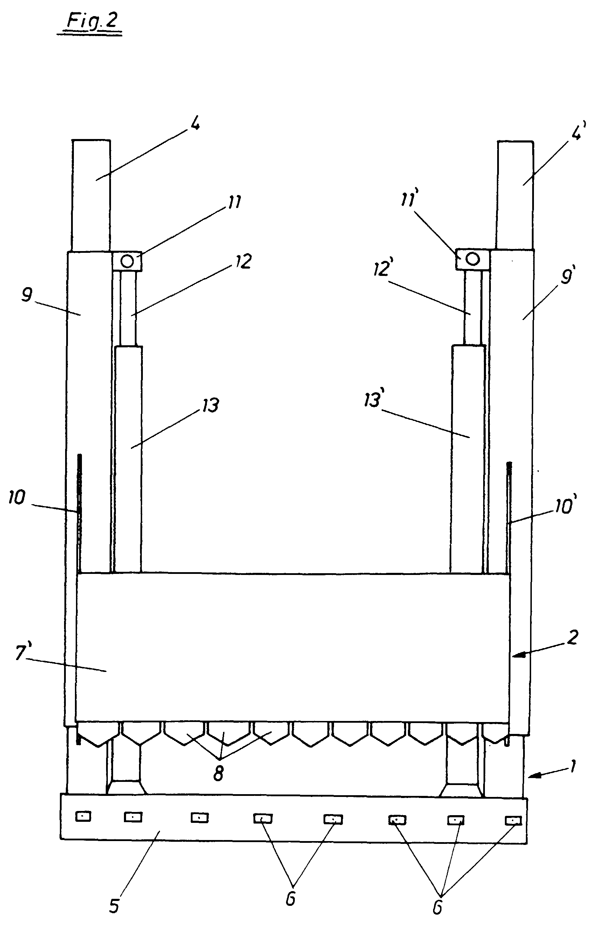

Fig. 2 zeigt, daß die beiden Vierkantprofile 4,4' parallel zueinander angeordnet sind. Die Hülsen 9,9', mit denen der Stanzrahmen 2 verbunden ist, stehen über angesetzte Blöcke 11, 11' mit den freien Enden der Kolbenstangen 12,12' zweier Arbeitszylinder 13, 13' in Wirkverbindung. Die Arbeitszylinder 13, 13' sind mit dem Querträger 5 des Grundgerüstes 1 fest verbunden. Durch Anheben und Absenken der Kolbenstangen 12, 12' ist der Stanzrahmen 2 mit den Hülsen 9, 9' auf den Vierkantprofilen 4, 4' auf- und abbewegbar.

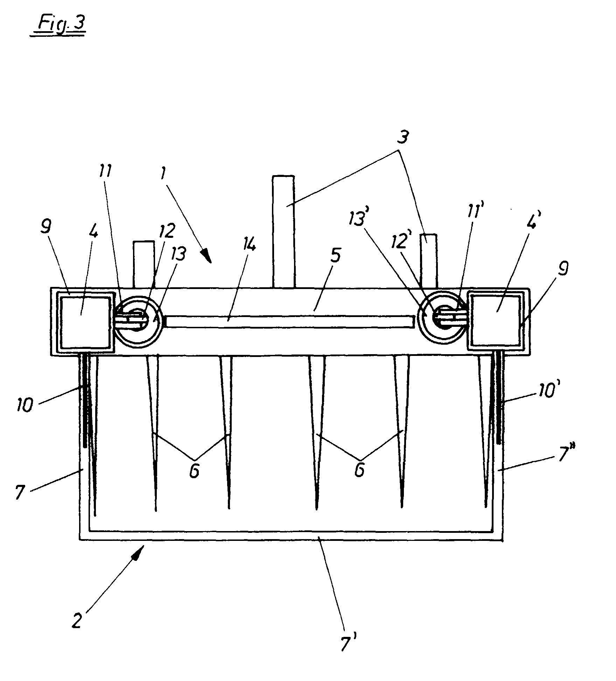

Die drei Messerleisten 7,7',7'' in Fig. 3 bilden den U-förmigen Stanzkasten 2 aus. Die Arbeitszylinder 13,13' sind in der Ebene der Vierkantprofile 4,4' und somit außerhalb des Stanzweges des Stanzrahmens 2 angeordnet. Zwischen ihnen ist ein Wandelement 14 befindlich, welches ein Herausfallen der Silage aus dem Stanzrahmen 2 verhindert.

## Patentansprüche

1. Vorrichtung zum Trennen von Silage mit einem an einem Grundgerüst (1) der Vorrichtung auf- und abbewegbar geführten, durch wenigstens ein Antriebsorgan angetriebenen Trennorgan, welches wenigstens drei einen U-Rahmen bildende Messerleisten (7, 7', 7") umfäßt,
wobei die Messerleisten relativ zueinander unbeweglich miteinander zu einem dadurch starr ausgebildeten Stanzrahmen (2) verbunden sind,
wobei die Messerleisten als Stanzwerkzeuge ausgebildet sind,
wobei das Antriebsorgan zur Beaufschlagung der Messerleisten mit der erforderlichen Stanzkraft ausgebildet und ausgelegt ist, und
wobei der Stanzrahmen auf wenigstens einem Paar etwa lotrecht stehender, durch das Grundgerüst gebildeter Führungen auf- und abbewegbar geführt ist, die als Vierkantprofile (4, 4') ausgebildet sind,
**dadurch gekennzeichnet,**
daß auf die Führungen (4,4') mit dem Stanzrahmen (2) verbundene, als Vierkantprofile mit weiterem Querschnitt als die Führungen (4,4') ausgebildete Hülsen (9,9') aufgeschoben sind und,
daß zwei in der Ebene der Führungen angeordnete Arbeitszylinder (13,13') als Antriebsorgane vorgesehen sind, die am Grundgerüst (1) befestigt sind und deren Kolbenstangen (12,12') über ihre freien Enden mit den Hülsen (9,9') des Stanzrahmens (2) verbunden sind.

## Claims

1. A device for cutting silage, comprising a cutting member movable up and down on a framework (1) of the device and driven by at least one driving member, the cutting member comprising at least three cutter plates (7, 7', 7") forming a U-frame,
wherein the cutter plates are interconnected so as to be mutually fixed and thereby form a rigidly constructed stamping frame (2),
wherein the cutter plates are formed as stamping tools,
wherein the driving member is formed and designed so as to exert the necessary stamping force on the cutter plates, and
wherein the stamping frame is movable up and down on at least one pair of substantially vertical guides formed by the framework and constructed as square sections (4, 4'),
characterised in that sleeves (9, 9'), connected to the stamping frame (2) and formed as square sections having a larger cross-section than the guides (4, 4'), are mounted on the latter,
and in that two working cylinders (13, 13'), arranged in the plane of the guides, are provided as driving members, the working cylinders (13, 13') being fixed to the framework (1) and the piston rods (12, 12') of which are connected via their free ends to the sleeves (9, 9') of the stamping frame (2).

## Revendications

1. Dispositif destiné à sectionner de l'ensilage comportant un organe de sectionnement guidé dans un mouvement de montée et de descente sur un bâti (1) du dispositif, entraîné par au moins un organe d'entraînement et qui comprend au moins trois lames en barre (7, 7', 7") formant un cadre en U,
les lames en barre étant reliées entre elles de manière à ne pouvoir se déplacer les unes par rapport aux autres, en formant ainsi un cadre de découpe (2) rigide,
les lames en barre étant réalisées sous la forme d'outils de découpe,
l'organe d'entraînement destiné à agir sur les lames en barre étant réalisé et conçu avec la force de découpe nécessaire et
le cadre de découpe étant guidé dans un mouvement de montée et de descente sur au moins une paire d'organes de guidage formés par le bâti et qui sont réalisés sous la forme de profilés carrés (4, 4'),
caractérisé
en ce que sur les organes de guidage (4, 4') sont enfilés des manchons (9, 9') reliés au cadre de découpe (2) et réalisés sous la forme de profilés carrés avec une section plus grande que les organes de guidage (4, 4'),
et en ce que deux vérins (13, 13') disposés dans le plan des organes de guidage sont prévus en tant qu'organes d'entraînement et sont fixés au bâti (1) et leurs tiges de piston (12, 12') sont reliées par leurs extrémités libres aux manchons (9, 9') du cadre de découpe (2).
